(19) Europäisches Patentamt
European Patent Office
Office européen des brevets

(11) Veröffentlichungsnummer: **0 009 756**
**B1**

(12) # EUROPÄISCHE PATENTSCHRIFT

(45) Veröffentlichungstag der Patentschrift: **04.08.82**

(51) Int. Cl.³: **C 08 G 18/16**

(21) Anmeldenummer: **79103635.3**

(22) Anmeldetag: **25.09.79**

(54) **Aktivierte Isocyanat-Vorpolymere und Verfahren zur Herstellung von elastomeren Polyurethankunststoffen.**

(30) Priorität: **06.10.78 DE 2843739**

(43) Veröffentlichungstag der Anmeldung: **16.04.80 Patentblatt 80/8**

(45) Bekanntmachung des Hinweises auf die Patenterteilung: **04.08.82 Patentblatt 82/31**

(84) Benannte Vertragsstaaten: **AT CH DE FR GB IT SE**

(56) Entgegenhaltungen:
**DE-A-1 694 249**
**DE-A-2 107 678**
**GB-A-1 463 809**

(73) Patentinhaber: **BAYER AG, Zentralbereich Patente, Marken und Lizenzen, D-5090 Leverkusen 1, Bayerwerk (DE)**

(72) Erfinder: **Grögler, Gerhard, Dr., Von-Diergardt-Strasse 46, D-5090 Leverkusen (DE)**
Erfinder: **Kallert, Wilhelm, Dr., An der Ruthen 1, D-5000 Köln 80 (DE)**

**EP 0 009 756 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Aktivierte Isocyanat-Vorpolymere und Verfahren zur Herstellung von elastomeren Polyurethankunststoffen

Die vorliegende Erfindung betrifft mit Alkylharnstoffen aktivierte, Isocyanatgruppen aufweisende Präpolymere sowie ein zweistufiges Verfahren zur Herstellung von Polyurethanelastomeren auf Basis von 1,5-Naphthylendiisocyanat unter Verwendung von Alkylharnstoffen als Aktivator.

Die Herstellung von vernetzten, hochelastischen Kunststoffen durch Umsetzung von im wesentlichen linearen, Hydroxylgruppen aufweisenden Polyestern oder Polyäthern mit einem Überschuß an 1,5-Napthylendiisocyanat und anschließende Reaktion mit Kettenverlängerungsmitteln ist seit langem bekannt. In der ersten Stufe dieses Herstellungsverfahrens werden die Polyester- bzw. Polyätherketten über Urethangruppen verknüpft und es entstehen im wesentlichen lineare Vorpolymere, welche an den Kettenenden freie Isocyanatgruppen enthalten. Das Molekulargewicht dieser Vorpolymeren ist um so größer, je kleiner der Überschuß an Diisocyanat über die zur vollständigen Reaktion mit den vorhandenen Hydroxylgruppen erforderliche Menge ist. Die so erhaltenen NCO-Präpolymeren können im wesentlichen nach zwei Verfahren in hochwertige, vernetzte Polyurethanelastomere übergeführt werden.

Eine Arbeitsweise (DE-PS 831 772) besteht darin, die NCO-Vorpolymeren mit einer etwas weniger als äquivalenten Menge an Glykolen umzusetzen. Hierbei tritt zunächst eine Kettenverlängerung der Vorpolymeren über Urethangruppen ein; in zweiter Phase reagieren die überschüssigen Isocyanatgruppen mit den Wasserstoffatomen der Urethangruppen unter Allophanatbildung und bewirken so eine Vernetzung des Moleküls.

Eine zweite Möglichkeit ist die Umsetzung der NCO-Präpolymeren mit einer etwas unterschüssigen Menge an Wasser bzw. Diaminen. Auf diese Weise wird eine Kettenverlängerung der Vorpolymeren über Harnstoffgruppen erreicht. Die Wasserstoffatome der Harnstoffgruppen reagieren in einer zweiten Phase wieder mit überschüssigen Isocyanatgruppen, was zu einer Vernetzung unter Ausbildung von Biuretgruppen führt. Da Biuretgruppen thermisch stabiler sind als die beim erstgenannten Verfahren entstehenden Allophanatgruppen, weisen die mit Wasser bzw. Diaminen als Kettenverlängerungsmittel hergestellten Elastomere ein besseres mechanisches Eigenschaftsbild, insbesondere im Hinblick auf die Strukturfestigkeit, Elastizität, Druckverformungsrest und Abrieb auf. Um die Ausbildung einer Zellstruktur im Elastomeren infolge des bei der Umsetzung von Isocyanaten mit Wasser freiwerdenden Kohlendioxids zu vermeiden, kann man das Material zur Formgebung unter Druck verpressen.

Bei der Vernetzung von NCO-Präpolymeren mit Glykolen oder Wasser in großtechnischem Maßstab ist es unbedingt erforderlich, daß die heißen Reaktionsansätze einerseits ausreichend lange Gießzeiten, andererseits möglichst kurze Verfestigungszeiten (Entformungszeiten) besitzen. Nur eine rasche Entformbarkeit der Elastomeren ermöglicht kurze Zykluszeiten und damit eine wirtschaftlich optimale Verfahrensweise. Es ist daher im allgemeinen erforderlich, die Kettenverlängerungsreaktion in geeigneter Weise zu beschleunigen.

Es ist seit langem bekannt, daß die Reaktion zwischen Isocyanatgruppen und Hydroxylgruppen bzw. Wasser durch die verschiedenartigsten Katalysatoren wie z. B. tertiäre Amine, Phenolate, Alkoholate oder metallorganische Verbindungen, beschleunigt werden kann. Alle bisher in der Praxis eingesetzten Katalysatoren weisen jedoch im Falle von 1,5-Naphthylendiisocyanat schwerwiegende Nachteile auf:

Infolge des hohen Schmelzpunktes von 1,5-Naphthylendiisocyanat (127°C) muß sowohl bei der Herstellung des Präpolymeren als auch bei der Kettenverlängerungsreaktion bei relativ hohen Temperaturen (ca. 110 bis 120°C) gearbeitet werden. Die üblichen Polyurethan-Katalysatoren führen jedoch bei diesen Temperaturen zu unerwünschten Nebenreaktionen, wie beispielsweise einer Trimerisierung der Isocyanatgruppen oder einer zu starken Allophanatisierung bzw. Biuretisierung. Es werden daher vielfach übervernetzte Endprodukte erhalten, welche ungenügende mechanische Eigenschaften, insbesondere zu geringe Reißfestigkeit, aufweisen. Darüber hinaus wird die Entformbarkeit der Polyurethane durch diese Katalysatoren zwar verkürzt, die Gießzeit der Reaktionsansätze wird jedoch drastisch verringert. Die rasche Viskositätserhöhung des Ansatzes bewirkt, daß — insbesondere bei größeren Reaktionsansätzen — eine kontrollierte Verarbeitung nicht mehr möglich ist. Außerdem ist speziell bei Formteilen mit komplizierter Geometrie kein einwandfreier Gießverlauf gewährleistet.

Die in der Polyurethanchemie meist als Beschleuniger eingesetzten tertiären Amine und organischen Metallverbindungen katalysieren bei den oben erwähnten hohen Temperaturen den oxidativen Angriff von Luftsauerstoff auf die Reaktionsteilnehmer. Amine geben darüberhinaus oft zu störenden Verfärbungen Anlaß und verleihen dem fertigen Kunststoff vielfach einen unangenehmen Geruch. Amine und insbesondere organische Metallverbindungen beschleunigen auch die Verseifung hydrolysierbarer Reaktionsteilnehmer, sodaß insbesondere die in der Praxis vielfach verwendeten Polyesterpolyole leicht hydrolytisch abgebaut werden.

Es wurde nun überraschend gefunden, daß N-Alkylharnstoffe hervorragende Katalysatoren für die Umsetzung von 1,5-Naphthylendiisocyanat mit Polyolen bzw. für die Kettenverlängerungsreaktion von Präpolymeren auf Basis von 1,5-Naphthylendiisocyanat darstellen und die oben geschilderten

Nachteile der bisher üblichen Katalysatoren nicht aufweisen. Die Gießzeit der Reaktionsansätze wird durch die N-Alkylharnstoffe trotz der hohen Umsetzungstemperatur nicht wesentlich verringert; die Entformungszeit der Elastomeren wird hingegen deutlich verkürzt. Die N-Alkylharnstoffe beeinträchtigen die Lagerstabilität von NCO-Präpolymeren auf Basis von 1,5-Naphthylendiisocyanat auch bei Temperaturen von ca. 100°C nicht, im Gegensatz zu bisher üblichen Katalysatoren, welche während der Lagerung des Präpolymeren zu einer erheblichen Trimerisierung und Allophanatisierung führen.

In der DE-A-2 107 678 wird ein Verfahren zur Herstellung von PU-Elastomeren beschrieben, wo man durch Zusatz von tert.-Butanol (als »Wasserspender«) in einem vorgelagerten Schritt ein durch aromatische Harnstoffgruppen, bzw. daraus z. T. sogar Biuretderivate, modifiziertes 1,5-Naphthylendiisocyanat herstellt und dieses modifizierte Diisocyanat zur Elastomersynthese verwendet.

Durch den Einbau von Harnstoff- und Biuretgruppen im modifizierten 1,5-Naphthylendiisocyanat wird zwar eine schnellere Entformbarkeit bei der Polyurethansynthese erhalten, wegen der starken Biuretverzweigungen jedoch nur verminderte Shore-Härten im Elastomer. Außerdem nimmt die als kritisch bekannte »freie Gießzeit« der mit modifiziertem 1,5-Naphthylendiisocyanat aufgebauten NCO-Prepolymeren (5 Stunden) gegenüber NCO-Prepolymeren mit nicht modifiziertem 1,5-Naphthylendiisocyanat (16 Stunden) deutlich ab, während die erfindungsgemäßen Zusätze von Alkylharnstoffen keine oder eine wesentlich geringere Wirkung auf die »freie Gießzeit« haben (vgl. Beispiel 7 derliegenden Patentanmeldung).

In der GB-PS 1 463 809 werden bereits N-Alkylharnstoffe als Aktivatoren für die Umsetzung von Isocyanaten mit Polyolen beschrieben. Als Isocyanate werden in diesem Zusammenhang Toluylendiisocyanat und Diphenylmethandiisocyanat genannt. Das erfindungsgemäße Verfahren unterscheidet sich hiervon in der Verwendung von 1,5-Naphthylendiisocyanat. Es wurde gefunden, daß N-Alkylharnstoffe für dieses Isocyanat eine spezielle selektive Wirksamkeit aufweisen. Vergleicht man Präpolymere auf Basis von 1,5-Naphthylendiisocyanat einerseits und 4,4'-Diisocyanatodiphenylmethan andererseits, welche jeweils durch Zusatz von N-Methylharnstoff aktiviert sind, so zeigt sich, daß die Gießzeit der Reaktionsansätze im Falle des Diisocyanatdiphenylmethans für die Erfordernisse der Praxis zu gering ist und die Entformungszeit um etwa den Faktor 2,5 verlängert wird (s. den Beispielteil).

Gegenstand der DE-AS 1 694 249 ist ein Verfahren zur Herstellung von Polyurethanschaumstoffen auf Basis von Polyätherpolyolen, Polyisocyanaten, Wasser und/oder anderen Treibmitteln, wobei die Verschäumungsreaktion in Gegenwart von offenen oder cyclischen Estern des 6wertigen Schwefels erfolgt. Als Katalysator für die Verschäumungsreaktion können dabei gegebenenfalls auch die verschiedenen N-substituierten Harnstoffe eingesetzt werden. Das erfindungsgemäße Verfahren unterscheidet sich hiervon einerseits darin, daß erfindungsgemäß unter solchen Bedingungen gearbeitet wird, daß im wesentlichen homogene Elastomere entstehen, andererseits in der gezielten Verwendung von Naphthylendiisocyanat als Isocyanatkomponente und schließlich auch darin, daß erfindungsgemäß keine weiteren Katalysatoren mitverwendet werden.

Gegenstand der Erfindung ist somit ein Verfahren zur Herstelllung von Polyurethan-Elastomeren durch Umsetzung von 1,5-Naphthylendiisocyanat mit einer im wesentlichen linearen, höhermolekularen Polyhydroxylverbindung zu einem Isocyanatgruppen aufweisenden Voraddukt und anschließende Reaktion mit einem Kettenverlängerungsmittel in Gegenwart eines Aktivators, welches dadurch gekennzeichnet ist, daß als Aktivator eine Verbindung der allgemeinen Formel

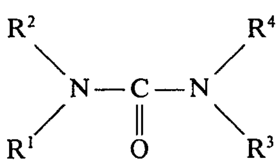

(I)

in welcher

$R^1$ einen gegebenenfalls durch eine Harnstoffgruppe der Formel

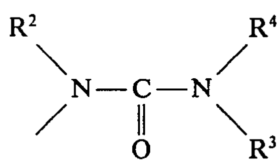

(II)

substituierten Alkyl-, Cycloalkyl-, Aralkyl- oder Aryl-Rest mit 1 bis 15 C-Atomen, vorzugsweise einen Alkylrest mit 1 bis 6 C-Atomen, besonders bevorzugt eine Methylgruppe, darstellt und

$R^2$, $R^3$ und $R^4$ für Wasserstoff, Phenyl oder gegebenenfalls verzweigte Alkylreste mit 1 bis 6 C-Atomen, vorzugsweise für Wasserstoff, stehen,

eingesetzt wird und daß man unter solchen Bedingungen arbeitet, daß im wesentlichen homogene Elastomere erhalten werden.

Gegenstand der Erfindung sind auch lagerstabile, aktivierte Vorpolymere mit endständigen Isocyanatgruppen, welche dadurch gekennzeichnet sind, daß sie aus

a) Verbindungen der allgemeinen Formel

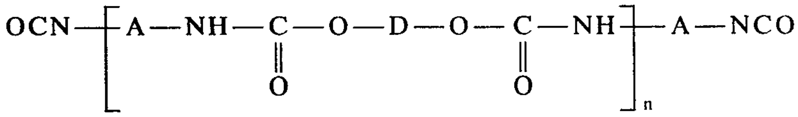

(III)

in welcher

A einen Rest

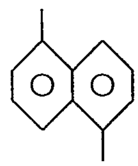

bedeutet,

D einen zweiwertigen Rest darstellt, wie er durch Entfernung der Hydroxylgruppen aus einem Glykol mit einem Molekulargewicht von 500 bis 6000 erhalten wird und

n für eine ganze Zahl von 1 bis 5, vorzugsweise 1 bis 2, steht,

b) gegebenenfalls monomerem 1,5-Naphthylendiisocyanat und

c) 0,001 bis 1 Gew.-%, vorzugsweise 0,01 bis 0,5 Gew.-%, bezogen auf a) + b), einer Verbindung der allgemeinen Formel

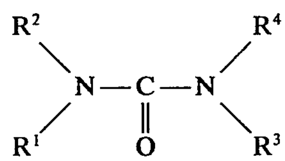

bestehen, in welcher $R^1$, $R^2$, $R^3$ und $R^4$ die oben angegebene Bedeutung haben.

Erfindungsgemäß geeignete Aktivatoren der obigen allgemeinen Formel (I) sind beispielsweise N-Methyl-, Äthyl-, Propyl-, Hexyl- und Phenylharnstoff, N,N'-Dimethyl-, Diäthyl-, Dibutyl- oder Diphenylharnstoff, N,N,N'-Trimethylharnstoff, N,N,N,N'-Tetrabutylharnstoff; weiterhin Harnstoffe, wie sie in an sich bekannter Weise durch Reaktion von aliphatischen, cycloaliphatischen oder aromatischen Monoaminen primärer oder sekundärer Art mit Monoisocyanaten erhalten werden. Dabei können die Harnstoffe vorgebildet oder in situ im Reaktionsansatz erzeugt werden. Höher alkylierte Harnstoffe, wie Trimethyl- oder Tetramethylharnstoff, sowie Arylharnstoffe, wie Diphenylharnstoff, müssen infolge ihrer geringen katalytischen Wirksamkeit in höheren Dosierungen (0,5—1,0%) eingesetzt werden. Sie beschleunigen in diesen Konzentrationen die Endverfestigung der erzeugten Harnstoffe ohne merklichen Einfluß auf die Gießzeit der Reaktionsansätze. Die Lagerstabilität der Isocyanatgruppen enthaltenden Voraddukte kann dagegen in gewissem Maße beeinträchtigt werden (siehe Beispiel 7).

Zur Herstellung der Isocyanatgruppen aufweisenden Voraddukte (III) wird das 1,5-Naphthylendiisocyanat mit einer im wesentlichen linearen Polyhydroxylverbindung vom Molekulargewicht 500 bis 6000, vorzugsweise 1000 bis 3000, in an sich bekannter Weise umgesetzt. Das NCO/OH-Äquivalentverhältnis beträgt dabei im allgemeinen 1,2 : 1 bis 5 : 1, vorzugsweise 1,5 : 1 bis 2,5 : 1.

Als Polyhydroxylverbindungen kommen im wesentlichen 2 (in untergeordneten Mengen gegebenenfalls auch 3) Hydroxylgruppen aufweisende Polyester, Polyäther, Polythioäther, Polyacetale, Polycarbonate und Polyesteramide in Betracht, wie sie für die Herstellung von homogenen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polyäthylenglykole, sowie Dibutylenglykol und höhere Polypropylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar. Erfindungsgemäß bevorzugt sind Polyester, insbesondere Adipinsäurepolyester, mit einem Molekulargewicht von 1000 bis 3000.

Auch die erfindungsgemäß in Frage kommenden Hydroxylgruppen aufweisenden Polyäther sind solche der an sich bekannten Art und werden, z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), 4,4'-Dihydroxy-diphenylpropan, Anilin, Äthanolamin oder Äthylendiamin hergestellt. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-OS 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z. B. die aus mehrwertigen gesättigten oder ungesättigten Carbonsäuren bzw deren Anhydriden und mehrwertigen gesättigten oder ungesättigten Aminoalkohlen, Diaminen, Polyaminen und deren Mischungen gewonnen, vorwiegend linearen Kondensate.

Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offfenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patent-

schrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben. Selbstverständlich können Mischungen der obengenannten Verbindungen, z. B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-OS 2 706 297).

Erfindungsgemäß bevorzugte höhermolekulare Polyhydroxylverbindungen sind Polyesterdiole, insbesondere solche auf Basis von Adipinsäure bzw. Äthylenglykol, 1,2-Propylenglykol, 1,4-Butandiol, Neopentylglykol und/oder 1,6-Hexandiol. Vor der Umsetzung mit dem Naphthylendiisocyanat sollten die Polyesterdiole zweckmäßig von gegebenenfalls vorhandenen Feuchtigkeitsspuren befreit werden. Dies geschieht z. B. durch Erhitzen auf 100 bis 150°C im Vakuum oder indem man bei erhöhter Temperatur inerte Gase durch die Polyesterschmelze leitet.

Bei der Umsetzung des Isocyanatgruppen aufweisenden Voraddukts auf Basis von 1,5-Naphthylendiisocyanat mit dem Kettenverlängerungsmittel wählt man vorzugsweise ein solches Mengenverhältnis, daß die NCO-Gruppen im leichten Überschuß vorliegen. In der Regel wird ein Äquivalentverhältnis zwischen NCO-Gruppen und Zerewitinow-aktiven Wasserstoffatomen zwischen 1,02 und 1,20 angewandt. Es ist jedoch auch möglich, das Kettenverlängerungsmittel in etwa äquivalentem Verhältnis zu den vorhandenen Isocyanatgruppen einzusetzen, sodaß zunächst ein im wesentlichen lineares Polyurethanmolekül entsteht. In dieses lineare Polyurethan werden dann vor der Formgebung noch ca. 1 bis 5 Gew.-% eines beliebigen Polyisocyanats als Vernetzer eingearbeitet.

Als Kettenverlängerungsmittel kommen erfindungsgemäß neben Wasser insbesondere Glykole mit einem Molekulargewicht zwischen 62 und 500 in Frage. Als Beispiele für derartige Verbindungen seien genannt: Äthylenglykol, Propylenglykol-(1,2) und -(1,3), Butandiol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Butendiol, Butindiol, Monochlorhydrin, Glycerin-monoalkyl- oder -monoaryl-äther, Xylylenglykole, das Diels-Alder-Anlagerungsprodukt von Butendiol an Anthracen, Chinit, Hexahydrobrenzcatechin, 4,4'-Dihydroxydiphenylpropan, Di-hydroxymethyl-hydrochinon, Hydrochinon-bis-hydroxyäthyläther, Diäthylenglykol, Triäthylenglykol, Tetraäthylenglykol, höhere Polyäthylenglykole mit einem Molekulargewicht bis 500, Dipropylenglykol, höhere Polypropylenglykole mit einem Molekulargewicht bis 500, Dibutylenglykol, höhere Polybutylenglykole mit einem Molekulargewicht bis 500 und N-Methyldiäthanolamin. Besonders geeignet sind 1,4- und 2,3-Butandiol, cyclische Glykole wie Hexahydrobrenzcatechin und Hydrochinon-bis-hydroxyäthyläther und Thiodiglykol.

Als Kettenverlängerungsmittel sind jedoch auch die oben im Detail beschriebenen höhermolekularen Dihydroxyverbindungen geeignet, besonders wenn besonders weiche Verfahrensprodukte hergestellt werden sollen. Es ist in diesem Fall häufig von Vorteil, bei der Kettenverlängerungsreaktion eine andere Dihydroxyverbindung einzusetzen als beim Aufbau des NCO-Präpolymeren (z. B. Polyester und Polyäther). Bei der Verwendung von Wasser als Kettenverlängerungsmittel ist die Bildung eines Schaumstoffes zu vermeiden. Dies gelingt, indem man in an sich bekannter Weise das Produkt unter Druck und Formgebung verpreßt.

Gegebenenfalls können in jeder Stufe des erfindungsgemäßen Verfahrens auch an sich bekannte Weichmacher, Farb- und Füllstoffe zugegeben werden. Geeignete Weichmacher sind beispielsweise Phthalsäureester und organische Sulfonamide. Besonders günstig sind häufig Schwefel enthaltende Weichmacher wie z. B. Methylen-bis-thioglykolsäurebutylester. Wie bei Naturkautschuk bewirken manche Füllstoffe eine Verbesserung der mechanischen Eigenschaften der erfindungsgemäß hergestellten Polyurethan-Elastomeren. Dies trifft z. B. auf Titandioxid, Siliciumdioxid, Bentonit, Calciumsilicat und Ruß zu. Diese Füllstoffe können z. B. direkt in die höhermolekulare Polyhydroxylverbindung oder auch in das NCO-Präpolymer eingearbeitet werden.

Die erfindungsgemäß hergestellten Polyurethan-Elastomeren weisen ein hervorragendes mechanisches Eigenschaftsbild und eine ausgezeichnete Beständigkeit gegenüber organischen Lösungsmitteln und Ölen auf. Diese Eigenschaften eröffnen den erfindungsgemäß hergestellten Elastomeren ein breites Einsatzgebiet, beispielsweise als Walzenbeläge, elastische Bauteile für Maschinen, Dichtungen, Puffer, Faltenbälge, Beläge für Kugelmühlen, Schuhsohlen, Zahnräder und Fahrzeugreifen.

Die nachfolgenden Beispiele erläutern die vorliegende Erfindung. Wenn nicht vermerkt, sind Mengenangaben als Gewichtsteile bzw. Gewichtsprozente zu verstehen.

Beispiel 1
(Vergleichsversuch)

In 500 g eines Polyesters aus Äthylenglykol und Adipinsäure mit endständigen Hydroxylgruppen und der OH-Zahl 56 werden bei 126°C 90 g 1,5-Naphthylendiisocyanat eingerührt. Nach etwa 15 Minuten steigt die Temperatur des Reaktionsgemisches nicht weiter an, d. h. die Reaktion ist praktisch beendet. Der dünnflüssigen Schmelze werden 10 g Butandiol-(1,4) zugesetzt und der Reaktionsansatz in eingewachste Formen, die auf 100°C geheizt sind, ausgegossen. Die Gießzeit beträgt 5 Minuten; die Entformungszeit ca. 30 Minuten.

Beispiel 2
(Vergleichsversuch)

Wird an Stelle von Butandiol-(1,4) eine Lösung von 0,2 g Diazabicyclooctan in 10 g Butandiol-(1,4) verwendet, so steigt die Viskosität der dünnflüssigen Schmelze rasch an und die Gießzeit des Ansatzes beträgt nur etwa 1 Min. Die Entformungszeit des Prüfkörpers liegt nunmehr bei 3—4 Min. Die mechanischen Werte eines so hergestellten Kunststoffes sind im Vergleich zu Beispiel 1 und 3 insbesondere bezüglich Zugfestigkeit, Weiterreißfestigkeit und Elastizität deutlich erniedrigt.

Beispiel 3

Wird zur Vernetzung des 1,5-Naphthylendiisocyanat enthaltenden Polyesters gemäß Beispiel 1 eine Lösung von 0,3 g N-Methylharnstoff in 10 g Butandiol-(1,4) verwendet, so bleibt die Schmelze bis zur Beendigung der Gießzeit (etwa 4 Min.) noch gut verarbeitbar und der Probekörper kann bereits nach 9—10 Min. entformt werden.

Mechanische Eigenschaften und Verarbeitungszeiten gemäß Beispiel 1—3

| | Beispiel 1 | Beispiel 3 | Beispiel 2 |
|---|---|---|---|
| Gießzeit [Min.] | 5 | 4 | 1—2 |
| Entformbarkeit [Min.] | 30 | 9—10 | 4 |
| Shore-Härte A (DIN 53 505) | 83 | 83 | 80 |
| Zugfestigkeit (DIN 53 504) [kp/cm$^2$] | 612 | 616 | 270 |
| Bruchdehnung (DIN 53 504) [%] | 750 | 710 | 780 |
| Weiterreißfestigkeit [kp/cm] | 56 | 58 | 35 |
| (DIN 53 515) (Graves) | | | |
| Elastizität [%] | 50 | 49 | 35 |

Beispiel 4
(Vergleichsversuch)

Der Zusatz einer Lösung von 0,08 g Zinn-(II)-äthylhexoat in 10 g Butandiol-(1,4) bewirkt bei dem NCO-Voraddukt gemäß Beispiel 1 bereits kurz nach dem Einrühren eine sehr starke Erhöhung der Viskosität, so daß eine einwandfreie Verarbeitung des Ansatzes nicht mehr möglich ist.

Beispiel 5

500 g eines Polyesters aus Adipinsäure und Äthylenglykol mit endständigen Hydroxylgruppen, der eine OH-Zahl von etwa 56 hat, werden auf 126° erhitzt und mit 0,25 g N-Methylharnstoff versetzt. Dann rührt man 90 g 1,5-Naphthylendiisocyanat ein. Die Reaktion zu dem Isocyanat enthaltenden Voraddukt ist nach 6 Min. beendet (anstatt 15 Min. ohne N-Methylharnstoff in Beispiel 1), d. h. die Temperatur steigt nicht weiter an. Nach Einrühren von 10 g Butandiol-(1,4) kann in eingewachste Formen ausgegossen werden. Die Viskosität des Reaktionsansatzes ist genau so niedrig und die Gießzeit etwa so lang (4 Min.) wie ohne Zusatz von N-Methylharnstoff. Bei Mitverwendung des Aktivators kann der Formkörper bereits nach etwa 10 Minuten entformt werden. Ohne Zusatz von N-Methylharnstoff dauert die Verfestigung etwa 30 Minuten.

Beispiel 6

Eine Produktionscharge eines Polyesters aus Adipinsäure und Äthylenglykol wird bei der Prüfung als zu träge reagierend befunden, d. h. der Temperaturanstieg bei der Reaktion mit 1,5-Naphthylendiisocyanat ist erst in etwa 15 Minuten beendet und ein mit Butanol-(1,4) vernetztes Material verfestigt sich erst nach etwa 45 Minuten. Dieser Charge werden 0,06% N-Methylharnstoff zugemischt. Jetzt verläuft die Umsetzung mit 1,5-Naphthylendiisocyanat wesentlich rascher, d. h. die Reaktion ist nach etwa 7 Minuten beendet, und ein nach Vermischen mit Butandiol-(1,4) gegossener genormter Formkörper kann nach etwa 12 Minuten aus der Form entnommen werden.

Beispiel 7

Zu einer Lösung von 0,5 g N-Methylharnstoff in 1000 g eines Polyesters aus Äthylenglykol und Adipinsäure (OH-Zahl = 56) werden in einem auf 126°C beheizten Thermostaten unter Rühren 180 g 1,5-Naphthylendiisocyanat zugesetzt. Die Reaktionstemperatur fällt zunächst auf 115°C, um dann wieder anzusteigen. Nach 8—9 Minuten ist die maximale Temperatur von 125—126° (Reaktionsbeendigung) erreicht. Um die katalytische Wirksamkeit mehrfach Methyl-substituierter Harnstoffe zu vergleichen, wurde nach obiger Methode diejenige Menge an Katalysator bestimmt, bei der der Temperaturanstieg von 116° auf 126° innerhalb derselben Zeit (8—9 Minuten) stattfindet.

| Alkylharnstoff | Menge [g/1000 g Polyester] | [mMol] |
|---|---|---|
| N-Methylharnstoff | 0,5 | etwa 7 |
| N,N'-Dimethylharnstoff | 1,0 | 11 |
| Trimethylharnstoff | 4,0 | 39 |
| Tetramethylharnstoff | 6,0 | 52 |

Werden diese 1,5-Naphthylendiisocyanat enthaltenden Voraddukte in bekannter Weise mit Butandiol-(1,4) vernetzt, so sind die Gießzeiten (etwa 4 Min.) und Verfestigungszeiten (8—10 Min.) bei allen katalysierten Systemen nahezu identisch. Bei der Langzeitlagerung in einem auf 110°C thermostatierten Behälter werden jedoch Abweichungen in der Viskosität dieser Voraddukte festgestellt. Wird die Zeit bis zu einer festgelegten Viskosität, als Maß für Allophanatisierung bzw. Trimerisierung, bestimmt, so zeigt sich folgendes Ergebnis.

| | Zeit [Stunden] |
|---|---|
| NCO-Voraddukt ohne Katalysator | 16 |
| NCO-Voraddukt mit N-Methylharnstoff | 16 |
| NCO-Voraddukt mit N,N'-Dimethylharnstoff | 12 |
| NCO-Voraddukt mit Trimethylharnstoff | 10 |
| NCO-Voraddukt mit Tetramethylharnstoff | 8 |

Beispiel 8

In 500 g eines entwässerten linearen Polypropylenglykoläthers vom Molgewicht 2000 werden bei 125°C 150 g 1,5-Naphthylendiisocyanat eingerührt. Nach Beendigung der Reaktion zum NCO-Voraddukt (ca. 10 Minuten) wird eine Lösung von 0,3 g N,N'-Dimethylharnstoff in 35 g Butandiol-(1,4) zugesetzt und der Reaktionsansatz in auf 100°C geheizte Formen ausgegossen. Nach einer Gießzeit von etwa 1 Min. kann der Formkörper nach etwa 6—8 Min. entnommen werden. Es entsteht ein hochelastischer Kunststoff mit ausgezeichneten mechanischen Eigenschaften.

Beispiel 9
(Vergleichsversuch)

Wird gemäß Beispiel 3 1,5-Naphthylendiisocyanat durch den äquivalenten Teil an 4,4'-Diisocyanatodiphenylmethan ersetzt, so werden wesentlich weichere Produkte erhalten. Erst die Erhöhung des 4,4'-Diisocyanatodiphenylmethan- sowie des Butandiol-(1,4)-Anteils führt zu Produkten mit gleicher Härte. 0,6 g N-Methylharnstoff werden in 1000 g eines Polyesters aus Äthylenglykol und Adipinsäure vom Molekulargewicht 2000 gelöst und danach bei 100—110°C 400 g 4,4'-Diisocyanatodiphenylmethan eingerührt. Nach Abklingen der exothermen Reaktion (etwa 10—12 Min.) werden 85 g Butandiol-(1,4) zugesetzt und der Reaktionsansatz in auf 110°C geheizte Formen gegossen. Nach einer Gießzeit von nur 1,5—2 Min. kann der genormte Formkörper erst nach etwa 25 Min. entnommen werden. Härte (Shore A) = 83.

Ein einwandfreier Gießverlauf ist infolge der kurzen Gießzeit des Reaktionsansatzes nicht gewährleistet und die lange Zykluszeit von etwa 25 Min. ist für die Praxisbedingungen unwirtschaftlich.

**Patentansprüche**

1. Verfahren zur Herstellung von Polyurethan-Elastomeren durch Umsetzung von 1,5-Naphthylendiisocyanat mit einer im wesentlichen linearen, höhermolekularen Polyhydroxylverbindung zu einem Isocyanatgruppen aufweisenden Voraddukt und anschließende Reaktion mit einem Kettenverlängerungsmittel in Gegenwart eines Aktivators, dadurch gekennzeichnet, daß als Aktivator eine Verbindung der allgemeinen Formel

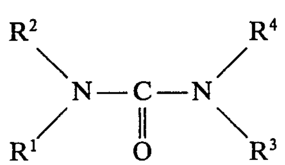

in welcher

$R^1$ einen gegebenenfalls durch eine Harnstoffgruppe der Formel

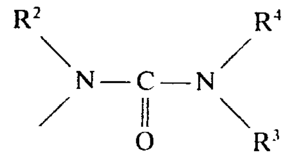

substituierten Alkyl-, Cycloalkyl-, Aralkyl-, oder Aryl-Rest mit 1 bis 15 C-Atomen darstellt und

$R^2$, $R^3$ und $R^4$ für Wasserstoff, Phenylreste oder gegebenenfalls verzweigte Alkylreste mit 1 bis 6 C-Atomen stehen,

eingesetzt wird, und daß man unter solchen Bedingungen arbeitet, daß im wesentlichen homogene Elastomere erhalten werden.

2. Verfahren nach Anspruch 1, dadurch gekennzeichnet, daß als höhermolekulare Polyhydroxylverbindung ein Polyesterdiol mit einem Molekulargewicht von 1000—3000 eingesetzt wird.

3. Verfahren nach Anspruch 1 oder 2, dadurch gekennzeichnet, daß als Kettenverlängerungsmittel 1,4-Butandiol, 2,3-Butandiol oder Thiodiglykol eingesetzt wird.

4. Verfahren nach Anspruch 1—3, dadurch gekennzeichnet, daß der Aktivator in einer Menge von 0,01 bis 0,5 Gew.-%, bezogen auf die Summe von Naphthylendiisocyanat und höhermolekularer Polyhydroxylverbindung, eingesetzt wird.

5. Verfahren nach Anspruch 1—4, dadurch gekennzeichnet, daß als Aktivator N-Methylharnstoff oder N,N'-Dimethylharnstoff eingesetzt wird.

6. Lagerstabile, aktivierte Vorpolymere mit endständigen Isocyanatgruppen, dadurch gekennzeichnet, daß sie aus

a) Verbindungen der allgemeinen Formel

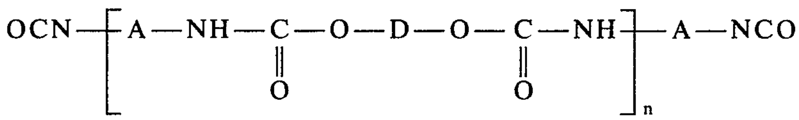

in welcher

A einen Rest

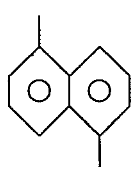

bedeutet,

D einen zweiwertigen Rest darstellt, wie er durch Entfernung der Hydroxylgruppen aus einem Glykol mit einem Molekulargewicht von 500 bis 6000 erhalten wird und

n für eine ganze Zahl von 1 bis 5 steht,

b) gegebenenfalls monomerem 1,5-Naphthylendiisocyanat und

c) 0,001 bis 1 Gew.-%, bezogen auf a) + b), einer Verbindung der allgemeinen Formel

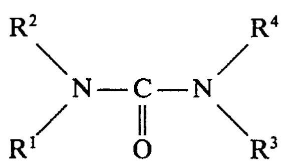

in welcher $R^1$, $R^2$, $R^3$ und $R^4$ die in Anspruch 1 angegebene Bedeutung haben,

bestehen.

7. Vorpolymere nach Anspruch 6, dadurch gekennzeichnet, daß D einen zweiwertigen Rest darstellt, wie er durch Entfernung der Hydroxylgruppen aus einem Polyesterdiol mit einem Molekulargewicht von 1000 bis 3000 erhalten wird.

8. Vorpolymere nach Anspruch 6 oder 7, dadurch gekennzeichnet, daß n für die Zahlen 1 oder 2 steht.

## Claims

1. Process for the production of polyurethane elastomers by the reaction of 1,5-naphthylene diisocyanate with a substantially linear, relatively high molecular polyhydroxyl compound to produce a prepolymer containing isocyanate groups, followed by a reaction with a chain lengthening agent in the presence of an activator, characterised in that the activator used is a compound corresponding to the following general formula:

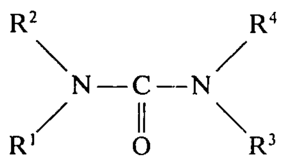

in which

$R^1$ represents an alkyl, cycloalkyl, aralkyl, or aryl group with 1 to 15 carbon-atoms which may be substituted by a urea group corresponding to the following formula:

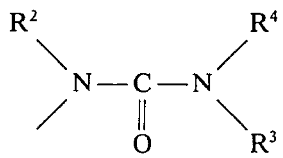

and

$R^2$, $R^3$ and $R^4$ represent hydrogen, phenyl groups or straight or branched chain alkyl groups having 1 to 6 carbon-atoms,

and in that the operating conditions employed are such that substantially homogeneous elastomers are obtained.

2. Process according to Claim 1, characterised in that the relatively high molecular polyhydroxyl compound used is ap polyester diol having a molecular weight of from 1000 to 3000.

3. Process according to Claim 1 or Claim 2, characterised in that the chain lengthening agent used is 1,4-butanediol, 2,3-butanediol or thiodiglycol.

4. Process according to claims 1 to 3, characterised in that the activator is used in a quantity of from 0.01 to 0.5% by weight, based on the sum of naphthylene diisocyanate and relatively high molecular polyhydroxyl compound.

5. Process according to claims 1 to 4, characterised in that the activator used is N-methylurea or N,N'-dimethylurea.

6. Activated prepolymers with isocyanate end groups which are stable in storage, characterised in that they comprise

a) compounds corresponding to the following general formula:

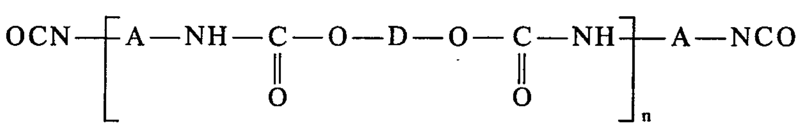

in which

A represents a group corresponding to the formula:

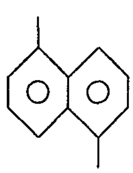

D represents a divalent group such as is obtained by removal of the hydroxyl groups from a glycol having a molecular weight of from 500 to 6000 and

n represents an integer of from 1 to 5,

b) optionally monomeric 1,5-naphthylene diisocyanate and

c) 0.001 to 1% by weight, based on a) + b), of a compound corresponding to the following general formula:

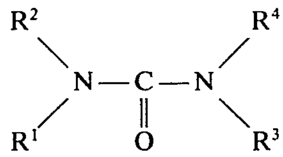

in which $R^1$, $R^2$, $R^3$ und $R^4$ have the meanings specified in claim 1.

7. Prepolymers according to Claim 6, characterised in that D denotes a divalent group as obtained by of the hydroxyl groups from a polyester diol having a molecular weight of from 1000 to 3000.

8. Prepolymers according to Claim 6 or Claim 7, characterised in that n represents the number 1 or 2.

**Revendications**

1. Procédé de préparation d'élastomères de polyuréthannes par réaction du 1,5-naphtylène-diisocyanate avec un composé polyhydroxylé à haut poids moléculaire, essentiellement linéaire, conduisant à un pré-adduct qui contient des groupes isocyanate, et réaction subséquente avec un agent d'allongement des chaînes en présence d'un activateur, caractérisé en ce que l'on utilise en tant qu'activateur un composé de formule générale:

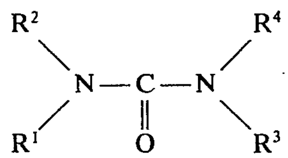

dans laquelle

$R^1$ représente un groupe alkyle, cycloalkyle, aralkyle ou aryle en C1—C15 éventuellement substitué par un groupe urée de formule

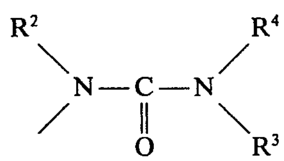

et

$R^2$, $R^3$ et $R^4$ représente l'hydrogène, des groupes phényle ou des groupes alkyle éventuellement ramifiés en C1—C6,

et en ce que l'on opère dans des conditions telles qu'on obtient des élastomères essentiellement homogènes.

2. Procédé selon la revendication 1, caractérisé en ce que l'on utilise en tant que composé polyhydroxylé à haut poids moléculaire un polyester-diol de poids moléculaire 1.000 à 3.000.

3. Procédé selon la revendication 1 ou 2, caractérisé en ce que l'on utilise en tant qu'agents d'allongement des chaînes le 1,4-butane-diol, le 2,3-butane-diol ou le thiodiglycol.

4. Procédé selon les revendications 1 à 3, caractérisé en ce que l'on utilise l'activateur en quantité de 0,01 à 0,5% en poids par rapport à la somme du naphtylène-diisocyanate et du composé polyhydroxylé à haut poids moléculaire.

5. Procédé selon les revendications 1 à 4, caractérisé en ce que l'on utilise comme activateur la N-méthylurée ou la N,N'-diméthylurée.

6. Prépolymères activés, stables à la conservation, contenant des groupes isocyanate terminaux, caractérisés en ce qu'ils consistent en

a) des composés de formule générale

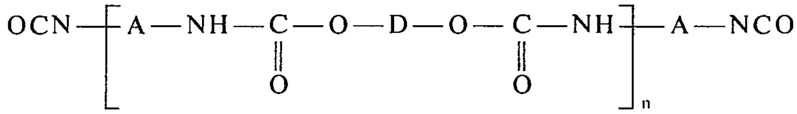

dans laquelle

A représente un reste

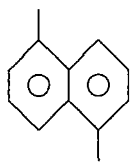

D représente un reste divalent tel qu'obtenu par élimination des groupes hydroxy dans un glycol de poids moléculaire 500 à 6.000 et

n est un nombre entier de 1 à 5,

b) le cas échéant du 1,5-naphtylène-diisocyanate monomère et

c) de 0,001 à 1% en poids, par rapport à a) + b), d'un composé de formule générale

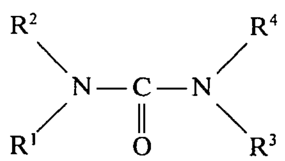

dans laquelle $R^1$, $R^2$, $R^3$ et $R^4$ ont les significations indiquées dans la revendication 1.

7. Prépolymères selon la revendication 6, caractérisés en ce que D représente un reste divalent tel qu'obtenu par élimination des groupes hydroxy dans un polyester-diol de poids moléculaire 1.000 à 3.000.

8. Prépolymères selon la revendication 6 ou 7, caractérisés en ce que n est égal à 1 ou 2.